# EUROPÄISCHE PATENTSCHRIFT

(11) **EP 3 057 184 B1**
(45) Veröffentlichungstag und Bekanntmachung des Hinweises auf die Patenterteilung: **25.01.2017**
(21) Anmeldenummer: 15154587.8
(22) Anmeldetag: 11.02.2015
(51) Int. Cl.: H01R 4/20, H01R 43/05, H01R 43/058, H02G 1/12

(54) **Verfahren und Vorrichtung zum Herstellen eines Kabels sowie ein nach dem Verfahren hergestelltes Kabel**
Method and device for manufacturing a cable and cable produced according to this method
Procédé et dispositif de fabrication d'un câble ainsi qu'un câble fabriqué selon ledit procédé

(43) Veröffentlichungstag der Anmeldung: 17.08.2016
(73) Patentinhaber: MD Elektronik GmbH, 84478 Waldkraiburg (DE)
(72) Erfinder: Friesinger, Johann, 83562 Rechtmehring (DE); Lindner, Markus, 84478 Waldkraiburg (DE)
(74) Vertreter: Hofmann, Ernst

(56) Entgegenhaltungen:
- DE-U1- 7 716 155
- JP-A- H07 256 464
- JP-A- 2001 196 148
- JP-A- 2006 236 724
- US-A1- 2012 118 633

## Beschreibung

### GEBIET DER TECHNIK

Die Erfindung betrifft ein Verfahren zur Herstellung eines konfektionierten Kabels gemäß dem Anspruch 1. Weiterhin umfasst die Erfindung eine Vorrichtung zum Herstellen bzw. Konfektionieren eines derartigen Kabels gemäß dem Anspruch 9 sowie ein mit dem Verfahren beziehungsweise mit der Vorrichtung hergestelltes Kabel nach Anspruch 15.

Die betreffenden Kabel sind etwa in Kraftfahrzeugen oder Luftfahrzeugen einsetzbar und werden meist in großen Stückzahlen benötigt. Zur kostengünstigen Bereitstellung entsprechender Kabel sind ein einfacher Aufbau und eine einfache Konfektionierbarkeit von großer Bedeutung.

### STAND DER TECHNIK

Aus der WO 03/097289 A1 ist ein Verfahren zur Herstellung eines Kabels bekannt, bei dem ein nicht abisoliertes Ende des elektrischen Leiters mit einem Kontaktpartner in Verbindung gebracht, der Verbindungsbereich erwärmt und anschließend zusammengepresst wird.

In der japanischen Offenlegungsschrift JP H07 256464 A ist ein Verfahren und eine Crimpvorrichtung zur Konfektionierung eines Kabels beschrieben. Die Crimpwerkzeuge weisen dort jeweils beheizbare Enden auf, so dass während des Crimpenvorgangs das Kabel erhitzt werden kann.

Das Dokument US 2012/0118633 A1 offenbart ein Verfahren zum Isolieren einer Mehrzahl von Drähten unter Verwendung eines Isolierschlauches, welcher während eines Pressvorganges erhitzt wird. Zudem ist in der US 2012/0118633 A1 eine entsprechende isolierte Drahtverbindung selbst beschrieben.

Gemäß der deutschen Gebrauchsmusterschrift DE 77 16 155 U1 wird eine Hülse aus Kupfer oder Messing auf ihrer Innenseite mit einer Zinnschicht versehen. Nachdem Drahtenden in die Hülse eingeführt worden sind, wird die Hülse unter Erwärmung mit Hilfe einer Schweißvorrichtung verpresst, so dass die Zinnschicht aufschmilzt und der Drahtlack zerstört wird um eine elektrisch leitende Verbindung der Drahtenden zu erreichen.

Schließlich zeigt die japanische Offenlegungsschrift JP 2006 236724 A eine beheizbare Crimpvorrichtung, wobei die Crimpwerkzeuge rotationssymmetrisch ausgestaltet sind.

### ZUSAMMENFASSUNG DER ERFINDUNG

Der Erfindung liegt die Aufgabe zugrunde, ein Verfahren zur Herstellung von qualitativ hochwertigen Kabeln zu schaffen, welches erlaubt Kabel mit vergleichsweise geringem Herstellungsaufwand zu produzieren. Außerdem umfasst die Erfindung auch eine neuartige Vorrichtung zur Herstellung von derartigen qualitativ hochwertigen Kabeln und nach dem Verfahren hergestellte Kabel.

Diese Aufgabe wird erfindungsgemäß durch die Merkmale der Ansprüche 1, 9 beziehungsweise des Anspruchs 15 gelöst.

Erfindungsgemäß dient das Verfahren zur Herstellung eines Kabels, welches einen Leiter aufweist, der mehrere Einzeldrähte umfasst. Der Leiter ist zumindest abschnittsweise, insbesondere entlang eines axialen Abschnitts des Leiters, von einer Isolierung umgeben. Zudem weist der Leiter eine Hülse auf. Das Verfahren umfasst folgende Schritte:
- Aufheizen des Leiters durch einen Induktionsprozess,
- Durchführung eines Crimpprozesses zur elektrischen Kontaktierung der Hülse mit dem Leiter, wobei bei dem Crimpprozess die Hülse mit dem aufgeheizten Leiter in einer Weise verpresst wird, dass
   zunächst eine Kompression des Leiters an einem ersten axialen Teilabschnitt des Leiters erzeugt wird und
   darauffolgend die Kompression des Leiters auf einen größeren zweiten axialen Teilabschnitt des Leiters ausgeweitet wird.

In vorteilhafter Weise wird der Crimpprozess unmittelbar im Anschluss an das Aufheizen des Leiters durchgeführt.

Das Aufheizen des Leiters wird so vorgenommen, dass dieser in sehr kurzer Zeit auf die gewünschte Temperatur aufgeheizt wird. Entsprechend wird das Aufheizen mit vergleichsweise hoher Leistung vorgenommen.

Vorzugsweise wird zur Durchführung des Crimpprozesses ein erstes Werkzeug entlang einer z-Richtung relativ zu einem zweiten Werkzeug bewegt und das erste Werkzeug und / oder das zweite Werkzeug werden beheizt. Insbesondere wird die Hülse mit dem Leiter unter Verwendung eines ersten Werkzeugs mit einer ersten Crimpfläche und eines zweiten Werkzeugs mit einer zweiten Crimpfläche verpresst. Zur Durchführung dieses Crimpprozesses wird das erste Werkzeug entlang einer z-Richtung relativ zum zweiten Werkzeug bewegt. Weiterhin werden das erste Werkzeug oder das zweite Werkzeug oder beide Werkzeuge aufgeheizt, wobei das Aufheizen beziehungsweise eine Temperierung des Leiters durch den Kontakt mit dem aufgeheizten Werkzeug erfolgt. Der zeitliche Ablauf des Crimpprozesses wird auch bei dieser Ausgestaltung des Verfahrens so eingestellt, dass der Leiter die erforderliche Verarbeitungstemperatur erreicht hat, bevor der Crimpprozess abgeschlossen ist.

Die Crimpflächen sind diejenigen Flächen der Werkzeuge, die während des Crimpprozesses mit der Hülse beziehungsweise mit dem Leiter in Berührkontakt gebracht werden. Die Crimpflächen können zur Optimierung der Standzeit der Werkzeuge behandelt, insbesondere beschichtet sein, so dass der Reibungskoeffizient und der Haftreibungsverschleiß reduziert sind. Ebenso können durch eine geeignete Beschichtung der Crimpflächen der Werkzeuge Materialanlagerungen und Kaltverschweißen im Laufe der Betriebszeit reduziert beziehungsweise vermieden werden.

In vorteilhafter Weise wird vor der Durchführung des Aufheizens die Isolierung zumindest abschnittsweise entfernt. Insbesondere wird die Isolierung an demjenigen axialen Abschnitt des Kabels entfernt, an dem darauffolgend die Hülse mit dem Leiter elektrisch kontaktiert wird.

Mit Vorteil ist der Crimpprozess so ausgestaltet, dass die Ausweitung der Kompression des Leiters ausgehend vom ersten axialen Teilabschnitt axial zu beiden Seiten des ersten axialen Teilabschnitts erfolgt.

Alternativ kann auch der Leiter vor der Durchführung des Crimpprozesses nicht abisoliert werden, so dass durch die hohe Temperatur des Leiters gegebenenfalls in Verbindung mit einem oder mehreren aufgeheizten Werkzeugen das weiche oder flüssige Material der Isolierung während des Crimpprozesses axial verdrängt wird.

In weiterer Ausgestaltung der Erfindung umfasst das Material der Isolierung Ethylenvinylacetat (EVA) oder PEVA (Polyethylen-Vinylacetat).

Vorzugsweise ist der Leiter so ausgestaltet, dass dessen Einzeldrähte eine Schlaglänge von mindestens 12 mm, insbesondere von mindestens 20 mm, insbesondere von mindestens 30 mm aufweisen. Der Begriff Schlaglänge beschreibt die Länge der Strecke, die ein einziger der Einzeldrähte des Leiters für eine 360° Drehung benötigt.

Vorzugsweise weist der Leiter einer Ader mindestens 10 Einzeldrähte, insbesondere mindestens 20 Einzeldrähte, auf.

Mit Vorteil wird der Crimpprozess bei einer Temperatur des Leiters von über 60 °C durchgeführt, vorzugsweise bei einer Temperatur von über 150°C, insbesondere bei einer Temperatur von über 200 °C. Insbesondere ist es vorteilhaft, wenn der Crimpprozess bei einer Temperatur des Leiters durchgeführt wird, die über der Schmelztemperatur des Materials der Isolierung liegt.

In weiterer Ausgestaltung der Erfindung weist das Kabel mehrere Leiter auf, die jeweils mehrere Einzeldrähte umfassen. Die Leiter sind zumindest abschnittsweise jeweils von einer Isolierung umgeben. Das Kabel weist zudem mehrere Hülsen auf, wobei bei einem aufgeheizten Leiter der Crimpprozess zur elektrischen Kontaktierung der Hülse durchgeführt wird, während gleichzeitig ein anderer Leiter aufgeheizt wird, zur Vorbereitung des Crimpprozesses für den anderen Leiter.

Die Erfindung betrifft auch eine Vorrichtung zum Herstellen eines Kabels, das einen Leiter insbesondere mit mehreren Einzeldrähten aufweist, wobei der Leiter mit einer Hülse durch eine Crimpverbindung elektrisch kontaktiert ist. Die Vorrichtung umfasst eine Heizvorrichtung zum Aufheizen des Leiters. Weiterhin weist die Vorrichtung ein erstes Werkzeug mit einer ersten Crimpfläche und ein zweites Werkzeug mit einer zweiten Crimpfläche auf. Zur Herstellung der Crimpverbindung ist das erste Werkzeug entlang einer z-Richtung über einen Bearbeitungshub hinweg relativ zum zweiten Werkzeug bewegbar. In einer ersten Relativposition der Werkzeuge zueinander sind die Crimpflächen über eine axiale Länge hinweg in z-Richtung einander gegenüberliegend angeordnet. Zudem liegen in der ersten Relativposition, die insbesondere am Beginn des Verpressens der Hülse von den Werkzeugen eingenommen wird, Punktepaare vor, die jeweils einen ersten Punkt auf der ersten Crimpfläche und einen zweiten Punkt auf der zweiten Crimpfläche umfassen. Die beiden Punkte eines Punktepaares sind in z-Richtung einander gegenüberliegend angeordnet, wobei für axial zueinander beabstandete Punktepaare die Abstände in z-Richtung zwischen den zugehörigen Punkten eines Punktepaars unterschiedlich groß sind.

Der Begriff "axial" bedeutet in Richtung der Längsachse des zu crimpenden Leiters, also orthogonal zur z-Richtung.

Der Leiter ist üblicherweise zumindest abschnittsweise also in einem axialen Abschnitt von einer Isolierung umgeben.

Erfindungsgemäß ist die Heizvorrichtung als Induktionsheizvorrichtung ausgestaltet, insbesondere weist die Heizvorrichtung eine elektromagnetische Spule auf.

In weiterer Ausgestaltung der Erfindung ist das erste Werkzeug oder das zweite Werkzeug beheizbar. Alternativ können auch beide Werkzeuge beheizbar sein. In diesem Fall kann die Heizvorrichtung als elektrische Widerstandsheizung zum Aufheizen des ersten und / oder des zweiten Werkzeugs ausgestaltet sein.

Vorzugsweise umfasst das erste Werkzeug und / oder das zweite Werkzeug mehrere Teilelemente, wobei jedes der Teilelemente eine Crimpfläche aufweist. Die Teilelemente des ersten Werkzeugs sind in z-Richtung relativ zueinander verschiebbar angeordnet. Alternativ oder zusätzlich können auch die Teilelemente des zweiten Werkzeugs in z-Richtung relativ zueinander verschiebbar angeordnet sein.

### KURZE BESCHREIBUNG DER ZEICHNUNGEN

Es zeigen die
- Figur 1a: eine Seitenansicht eines Kabels mit einem Schneidwerkzeug zu Beginn der Verarbeitung,
- Figur 1b: eine Vorderansicht des Kabels,
- Figur 2: eine Seitenansicht des Kabels an dessen Ende Adern des Kabels freigelegt ist,
- Figur 3: eine Seitenansicht des Kabels nach einem weiteren Verarbeitungsschritt,
- Figur 4: eine Seitenansicht des Kabels, nach einem Schneidprozess und einem Absisolierschritt,
- Figur 5: eine Seitenansicht des Kabels mit einer Heizvorrichtung,
- Figur 6a: eine Seitenansicht einer Hülse,
- Figur 6b: eine Frontansicht der Hülse,
- Figur 7: eine Seitenansicht des Kabels mit Werkzeugen zum Crimpen in einer ersten Relativposition,
- Figur 8: eine Seitenansicht des Kabels mit Werkzeugen zum Crimpen,
- Figur 9: eine Detailansicht im Längsschnitt der Werkzeuge mit dem Kabel in der ersten Relativposition,
- Figur 10: eine Detailansicht im Längsschnitt der Werkzeuge mit dem Kabel in der ersten Relativposition gemäß einen zweiten Ausführungsbeispiel,
- Figur 11: eine Detailansicht im Längsschnitt der Werkzeuge mit dem Kabel in der ersten Relativposition gemäß einen dritten Ausführungsbeispiel,
- Figur 12: eine Detailansicht im Längsschnitt der Werkzeuge mit dem Kabel in der zweiten Relativposition gemäß einen dritten Ausführungsbeispiel.

### BESCHREIBUNG DER AUSFÜHRUNGSFORMEN

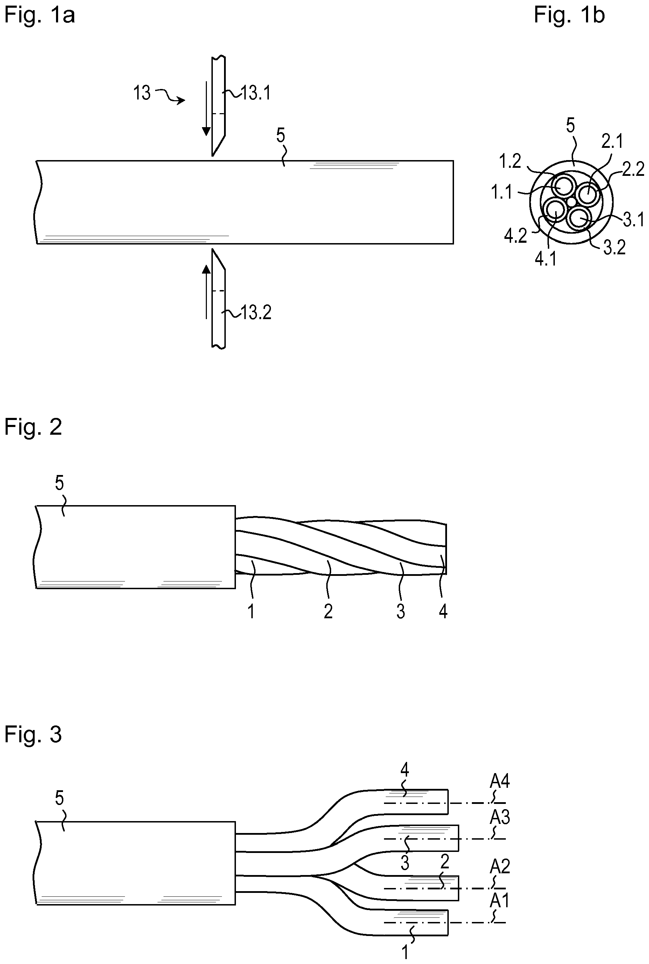

In der Figur 1a ist eine Seitenansicht eines Endes eines Kabels gezeigt, welches bearbeitet beziehungsweise konfektioniert werden soll. In dieser Abbildung ist vom Kabel nur ein äußerer Mantel 5 erkennbar, wobei der Mantel 5 aus elektrisch isolierendem Material, beispielsweise aus einem thermoplastischen Elastomer, insbesondere auf Urethanbasis, hergestellt ist.

Das Kabel weist im vorgestellten Ausführungsbeispiel vier verdrillte Adern 1, 2, 3, 4 auf. Die Adern 1, 2, 3, 4 umfassen jeweils einen innen liegenden Leiter 1.1, 2.1, 3.1, 4.1 (Figur 1 b), wobei jeder der Leiter 1.1, 2.1, 3.1, 4.1 aus einer Vielzahl von verseilten Einzeldrähten besteht. Im vorgestellten Ausführungsbeispiel beträgt die Schlaglänge 20 mm. Jede der Adern 1, 2, 3, 4 beziehungsweise jeder Leiter 1.1,2.1,3.1, 4.1 weist hier 27 Einzeldrähte auf.

Jeder Leiter 1.1, 2.1, 3.1, 4.1 ist jeweils von einer Isolierung 1.2, 2.2, 3.2, 4.2 umgeben. Das Material für die Isolierungen 1.2, 2.2, 3.2, 4.2 ist im vorgestellten Ausführungsbeispiel Ethylenvinylacetat (EVA). Radial außerhalb bezüglich der Adern 1, 2, 3, 4 befindet sich der Mantel 5.

Im Zuge der Konfektionierung wird das Ende des Kabels zunächst in einer Vorrichtung zum Herstellen des konfektionierten Kabels mit einem Schneidwerkzeug 13 bearbeitet (Figur 1 a). Das Schneidwerkzeug umfasst zwei Schneidklingen 13.1, 13.2, die eine V-förmige Form zum Umgriff des Mantels 5 aufweisen. Um den Mantel 5, zu scheiden werden die Schneidklingen 13.1, 13.2 orthogonal zur Längsachse des Kabels einander angenähert, bis die Schneidklingen 13.1, 13.2 mit genügender Tiefe in den Mantel 5 eingedrungen sind. Danach wird das Ende des Mantels 5 in axialer Richtung abgezogen, so dass schließlich gemäß der Figur 2 der Mantel 5 an einem Ende des Kabels entfernt ist und dort die innen liegenden Adern 1, 2, 3, 4 freigelegt sind.

In einem darauffolgenden Schritt der Herstellung beziehungsweise Konfektionierung des Kabels werden die Adern 1, 2, 3, 4 gemäß der Figur 3 weitgehend gestreckt und entsprechend einer Gabelform angeordnet, so dass die Enden der Adern 1, 2, 3, 4 in einer Ebene liegen. Die Enden der Adern 1, 2, 3, 4 weisen jeweils eine Längsachse A1, A2, A3, A4 auf, wobei die Längsachsen A1, A2, A3, A4 im Wesentlichen parallel zueinander und entsprechend in einer Ebene angeordnet sind.

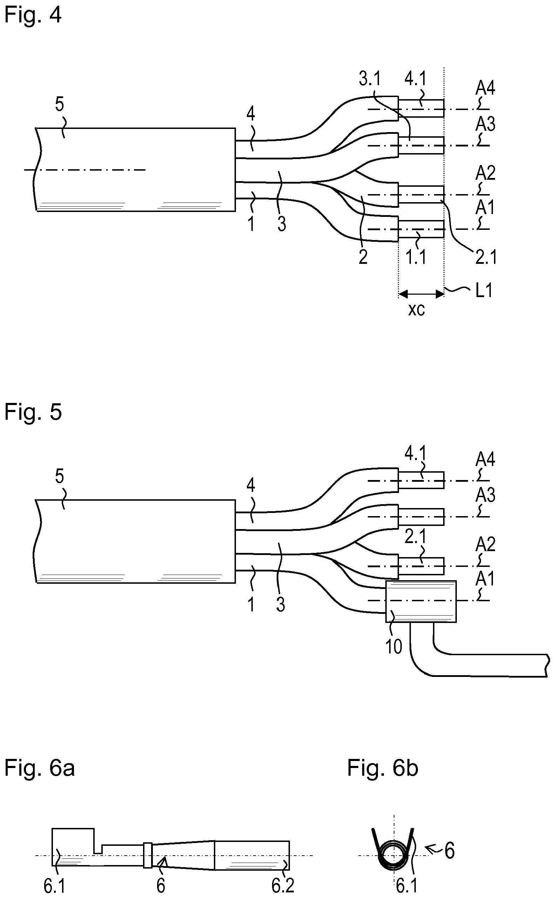

Zur Erreichung einer definierten Länge der Adern 1, 2, 3, 4 werden diese zunächst gemäß der Figur 4 entlang einer Linie L1 abgeschnitten. Danach werden die Enden der Adern 1, 2, 3, 4 über eine Länge xc hinweg abisoliert, so dass die Leiter 1.1, 2.1, 3.1, 4.1 dort freigelegt sind. Die Leiter 1.1, 2.1, 3.1, 4.1 umfassen, wie oben erwähnt, verdrillte Einzeldrähte, wobei in den Figuren der Übersichtlichkeit halber auf die explizite Darstellung der Einzeldrähte verzichtet wurde. Herstellungsbedingt befinden sich auch in den abisolierten Bereichen der Leiter 1.1, 2.1, 3.1, 4.1 Reste der Isolierungen 1.2, 2.2, 3.2, 4.2 zwischen den verdrillten Einzeldrähten der Leiter 1.1, 2.1, 3.1,4.1.

Im nächsten Bearbeitungsschritt wird eine Heizvorrichtung 10, die im Wesentlichen hohlzylindrisch ausgestaltet ist, über den ersten Leiter 1.1 geschoben. Die Heizvorrichtung 10 ist hier als eine Induktionsheizvorrichtung ausgestaltet und umfasst eine Wendel, durch die ein entsprechender Wechselstrom fließt, so dass im Leiter 1.1 ein Wärme erzeugender Wirbelstrom induziert wird.

In unmittelbaren Anschluss daran wird eine Hülse 6 gemäß den Figuren 6a, 6b in einer Crimpvorrichtung mit dem ersten Leiter 1.1 verbunden. Die elektrisch leitende Hülse 6 umfasst im vorgestellten Ausführungsbeispiel eine offene Crimpkralle 6.1 sowie ein Kupplungsende 6.2, das zur Herstellung einer Steckverbindung mit einem weiteren Kupplungsteil im bestimmungsgemäßen Einsatz des Kabels geeignet ist.

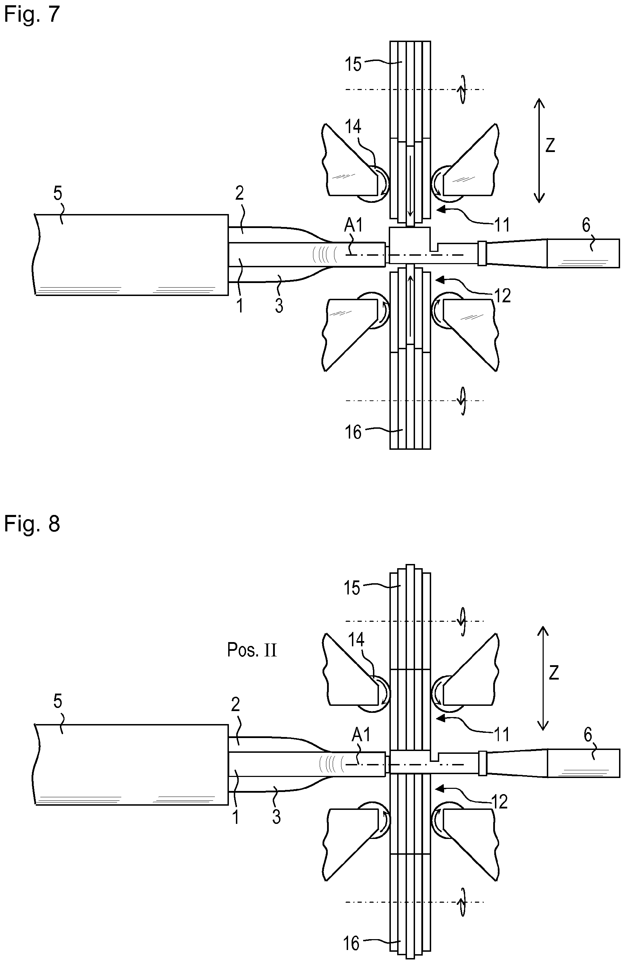

Nachdem der erste Leiter 1.1 soweit aufgeheizt wurde, dass dieser im abisolierten Bereich eine Temperatur aufweist, die über der Schmelztemperatur der Isolierung 1.2 liegt, wird die Heizung 10 entfernt. Der erste Leiter 1.1 wird sodann der Crimpvorrichtung zugeführt, wobei der abisolierte erste Leiter 1.1 in der Crimpkralle 6.1 zu liegen kommt. Die Crimpkralle 6.1 und der abisolierte erste Leiter 1.1 befinden sich zwischen einem ersten Werkzeug 11, zum Beispiels einem Crimpstempel, und einem zweiten Werkzeug 12, etwa einem Amboss oder einem zweiten Crimpstempel, der Crimpvorrichtung (Figur 7).

Zum Crimpen des ersten Leiters 1.1 wird das erste Werkzeug 11 entlang einer z-Richtung relativ zum zweiten Werkzeug 12 innerhalb eines Bearbeitungshubs bewegt.

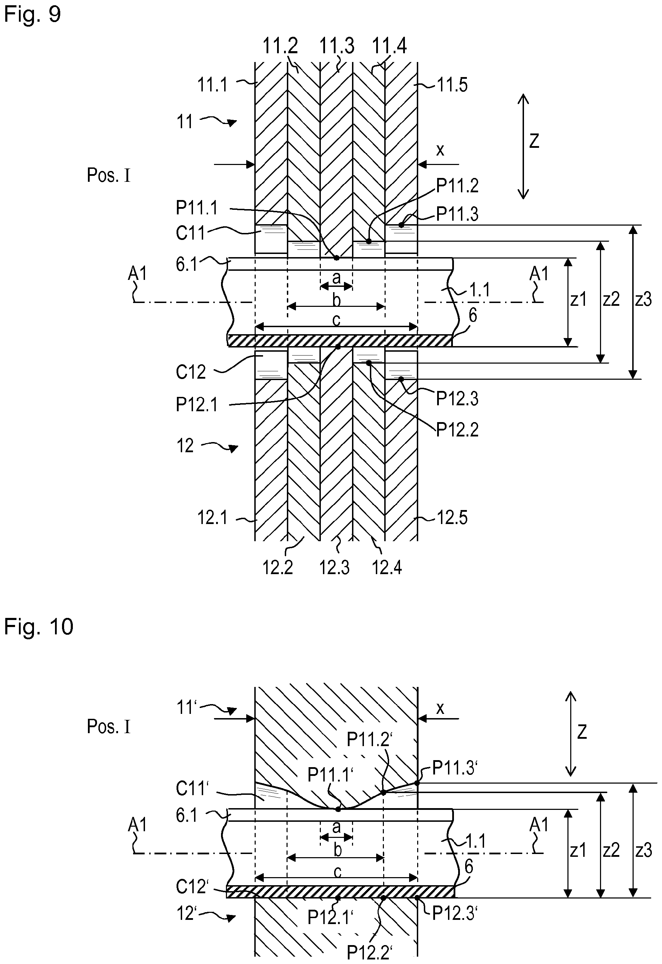

In der Figur 9 ist ein mittiger Längsschnitt durch das erste Werkzeug 11, das zweite Werkzeug 12, die Hülse 6 sowie durch den ersten Leiter 1.1 dargestellt, wobei auch hier auf die Schnittdarstellung der Einzeldrähte der besseren Übersichtlichkeit halber verzichtet wurde. Das erste Werkzeug 11 und das zweite Werkzeug 12 weisen eine axiale Länge x auf und umgreifen die Hülse 6 mit dem Leiter 1.1. Zudem weisen das erste Werkzeug 11 eine erste Crimpfläche C11 und das zweite Werkzeug 12 eine zweite Crimpfläche C12 auf.

Gemäß dem ersten Ausführungsbeispiel nach Figur 9 umfasst jeweils das erste Werkzeug 11 und das zweite Werkzeug 12 mehrere Teilelemente 11.1 bis 11.5; 12.1 bis 12.5. Die erste Crimpfläche C11 erstreckt sich über die Teilelemente 11.1 bis 11.5 des ersten Werkzeugs 11 und die zweite Crimpfläche C12 erstreckt sich über die Teilelemente 12.1 bis 12.5 des zweiten Werkzeugs 12. Somit weist jedes der Teilelemente 11.1 bis 11.5; 12.1 bis 12.5 eine Crimpfläche C11, C12 auf.

Die Crimpflächen C11, C12 sind dazu eingerichtet mit der Hülse 6, insbesondere mit der Crimpkralle 6.1 in mechanischen Kontakt zu kommen um diese plastisch zu verformen.

Die Teilelemente 11.1 bis 11.5 des ersten Werkzeugs 11 sind in z-Richtung relativ zueinander verschiebbar angeordnet. Ebenso sind die Teilelemente 12.1 bis 12.5 des zweiten Werkzeugs 12 in z-Richtung relativ zueinander verschiebbar angeordnet. Es sind also die Teilelemente 11.1 bis 11.5; 12.1 bis 12.5 ein und desselben Werkzeugs 11, 12 in z-Richtung relativ zueinander verschiebbar angeordnet.

In der Figur 9 ist die Vorrichtung zur Herstellung der Crimpverbindung in einer Stellung am Beginn des Crimpprozesse gezeigt, in der die Werkzeuge 11, 12 in einer ersten Relativposition I zueinander stehen und in der die Crimpflächen C11, C12 über eine axiale Länge x hinweg in z-Richtung einander gegenüberliegend angeordnet sind.

Geometrisch betrachtet liegen bei der Vorrichtung zur Herstellung der Crimpverbindung Punktepaare vor, die jeweils einen ersten Punkt P11.1, P11.2, P11.3 auf der ersten Crimpfläche C11 und einen zweiten Punkt P12.1, P12.2, P12.3 auf der zweiten Crimpfläche C12 umfassen.

Die beiden Punkte P11.1, P11.2, P11.3; P12.1, P12.2, P12.3 eines Punktepaares sind in z-Richtung gegenüberliegend angeordnet, in der Figur 9 also übereinander dargestellt (Punktepaare: P11.1 - P12.1 / P11.2 - P12.2 / P11.3 - P12.3). Dabei gilt, dass in der ersten Relativposition I für axial zueinander beabstandete Punktepaare die Abstände z1, z2, z3 zwischen den zugehörigen Punkten P11.1, P11.2, P11.3; P12.1, P12.2, P12.3 unterschiedlich groß sind (Relativposition I: z1 ≠ z2 ≠ z3)

In der Figur 9 sind die Werkzeuge 11, 12 in der ersten Relativposition I gezeigt. In dieser Relativposition I ist die Crimpkralle 6.1 bereits unvollständig plastisch verformt, so dass bei weiterer Verkleinerung des Abstandes der Werkzeuge 11, 12 eine Kompression des ersten Leiters 1.1 beginnt. In der ersten Relativposition I ist der Abstand z1, z2, z3 von den einander in z-Richtung gegenüberliegender Crimpflächen beziehungsweise Punktepaaren P11.1 - P12.1 / P11.2 - P12.2 / P11.3 - P12.3 des ersten und des zweiten Werkzeugs 11, 12 über die axiale Länge x hinweg unterschiedlich groß. In den Figuren 7, 8 und 9 ist der Unterschied zwischen den Abständen z1, z2, z3 zur Verdeutlichung überpropotional groß dargestellt. In der Realität können die Differenzen Δz21 = z2-z1 beziehungsweise Δz32 = z3-z2 weniger als ein Millimeter betragen.

Wenn nun ausgehend von der Relativposition I die Werkzeuge 11, 12 entlang der z-Richtung weiter zusammengefahren werden, wird zunächst an einem ersten axialen Teilabschnitt a des Leiters 1.1 eine Kompression des Leiters 1.1 beziehungsweise der zugehörigen Einzeldrähte erzeugt.

Die Reste der Isolierungen 1.2, 2.2, 3.2, 4.2 zwischen den verdrillten Einzeldrähten der Leiter 1.1, 2.1, 3.1, 4.1 sind aufgrund der durch die Aufheizung vorherrschenden Temperaturen im Leiter 1.1 so heiß, dass diese weich beziehungsweise flüssig sind. In der Folge werden diese Reste im Zuge des Crimpprozesses in axialer Richtung bezüglich der mittleren Teilelemente 11.3, 12.3 beidseitig in Richtung der Achse A1 nach außen gedrängt, also außerhalb des ersten axialen Teilabschnitts a in einen zweiten axialen Teilabschnitt b. Bei fortschreitender Reduzierung des Abstandes der Werkzeuge 11, 12 wird darauffolgend die Kompression des Leiters 1.1 durch die Teilelemente 11.2, 11.4, 12.2, 12.4 auf den im Vergleich zum ersten axialen Teilabschnitt a größeren zweiten axialen Teilabschnitt b ausgeweitet. Demgemäß werden die Reste der Isolierung 1.2 zwischen den verdrillten Einzeldrähten des Leiters 1.1 weiter axial nach außen gedrängt, insbesondere in den dritten axialen Teilabschnitt c. Schließlich komprimieren bei weiterem Zusammenfahren der Werkzeuge 11, 12 auch die Teilelemente 11.1, 11.5, 12.1, 12.5 die aufgeheizten Einzeldrähte, so dass die akkumulierten Reste der Isolierung 1.2 zwischen den verdrillten Einzeldrähten auch aus dem dritten axialen Teilabschnitt c gedrängt werden.

Die Crimpvorrichtung ist so ausgestaltet, dass ab einem bestimmten Mindestabstand zwischen den mittleren Teilelementen 11.3, 12.3 bei weiterem Zusammenfahren der Werkzeuge 11, 12 die Differenzen Δz21 = z2-z1 beziehungsweise Δz32 = z3-z2 kleiner werden und in der Endstellung der Werkzeuge 11, 12, wenn also die Verformung der Hülse 6 abgeschlossen ist, die Differenzen Δz21 und Δz32 den Wert Null annehmen (Relativposition II gemäß der Figur 8).

Die Vorrichtung zum Herstellen eines Kabels weist zu diesem Zweck zwei Wellen 15, 16 auf, die nach Art einer Nockenwelle ausgebildet sind. Jede der Wellen 15, 16 dreht sich um die eigene Achse, wobei durch Nocken beziehungsweise durch exzentrische Laufbahnen diese Drehbewegungen jeweils in eine Längsbewegung der relativ zueinander in z-Richtung verschiebbaren Teilelemente 11.1 bis 11.5. und Teilelemente 12.1 bis 12.5 umgewandelt wird. Am Ende des Bearbeitungshubs gemäß der Figur 8, also in der zweiten Relativposition II haben die Teilelemente 11.1 bis 11.5, 12.1 bis 12.5 eine relative Lage zueinander eingenommen, bei der die Crimpflächen C11, 12 keine Stufen aufweisen. Damit die vergleichsweise dünnen Teilelemente 11.1 bis 11.5, 12.1 bis 12.5 beim Crimpprozess nicht verformt oder auseinander gedrückt werden, weist die Crimpvorrichtung Führungsrollen 14 auf, welche die Pakete der Teilelemente 11.1 bis 11.5, 12.1 bis 12.5 axial (in Richtung der Längsachse des zu crimpenden Leiters) zusammenhalten.

Während der erste Leiter 1.1 und die Hülse 6 gecrimpt werden, wird bereits durch die Aufheizvorrichtung der zweite Leiter 1.2 aufgeheizt. Sobald die erste Crimpung abgeschlossen ist, kann dann umgehend die zweite Crimpung vorgenommen werden, während dann schon der dritte Leiter 1.3 aufgeheizt wird. Auf diese Weise können sequentiell alle Leiter 1.1 bis 4.1 bearbeitet (aufgeheizt und gecrimpt) werden, Alternativ kann natürlichen auch eine parallele Verarbeitung mit einer entsprechend ausgestalteten Vorrichtung vorgenommen werden, so dass alle Leiter 1.1 bis 4.1 gleichzeitig aufgeheizt und unmittelbar darauffolgend gleichzeitig gecrimpt werden.

Für eines der Werkzeuge 11, 12 oder für beide kann eine Heizvorrichtung vorgesehen sein, so dass die Werkzeuge 11, 12 beim Crimpprozess aufgeheizt sind. Gleichermaßen kann die Hülse 6 beim Crimpprozess durch eine entsprechende Heizvorrichtung aufgeheizt werden.

In der Figur 10 ist ein zweites Ausführungsbeispiel gezeigt, das sich vom ersten Ausführungsbeispiel im Wesentlichen durch eine andere Ausgestaltung der Crimpvorrichtung unterscheidet. Demnach umfasst die Vorrichtung ein erstes Werkzeug 11', welches einstückig ausgestaltet ist, beispielsweise als ein einstückiger Crimpstempel. Das zweite Werkzeug 12' ist gleichermaßen einstückig ausgeführt und dient hier als Amboss. Das erste Werkzeug 11' weist eine wellenartige Crimpfläche C11' auf, während das zweite Werkzeug 12' eine im Wesentlichen hohlzylindrische Crimpfläche C12' aufweist, so dass in einer ersten Relativposition I gemäß der Figur 10 die Abstände z1, z2, z3 von einander in z-Richtung gegenüberliegender Punkte P11.1', P11.2', P11.3'; P12.1', P12.2', P12.3' auf den Crimpflächen C11', C12' des ersten und des zweiten Werkzeugs 11', 12' über die axiale Länge x hinweg unterschiedlich groß sind. Demgemäß liegen auch hier Punktepaare vor, die jeweils einen ersten Punkt P11.1', P11.2', P11.3' auf der ersten Crimpfläche C11' und einen zweiten Punkt P12.1', P12.2', P12.3' auf der zweiten Crimpfläche C12' umfassen, wobei die beiden Punkte P11.1', P11.2', P11.3'; P12.1', P12.2', P12.3' eines Punktepaares in z-Richtung gegenüberliegend angeordnet sind. Für axial zueinander beabstandete Punktepaare gilt, dass die Abstände z1, z2, z3 zwischen den zugehörigen Punkten P11.1', P11.2', P11.3'; P12.1', P12.2', P12.3' unterschiedlich groß sind.

Gemäß dem zweiten Ausführungsbeispiel wird nach dem Aufheizen eines der Leiter 1.1, 2.1, 3.1, 4.1 ein Crimprozess durchgeführt, bei dem der aufgeheizte Leiter 1.1, 2.1, 3.1, 4.1 mit der Hülse 6 elektrisch kontaktiert wird. Das Verpressen erfolgt in der Weise, dass zunächst eine Kompression des Leiters 1.1, 2.1, 3.1, 4.1 an dem ersten axialen Teilabschnitt a des Leiters 1.1, 2.1, 3.1, 4.1 erzeugt wird. Darauffolgend wird die Kompression des Leiters 1.1, 2.1, 3.1, 4.1 auf einen größeren zweiten axialen Teilabschnitt b ausgeweitet und schließlich auf den noch größeren axialen Teilabschnitt c. Somit wird erreicht, dass Reste der Isolierung 1.2, 2.2, 3.2, 4.2 im Zuge des Crimpprozesses in axialer Richtung beidseitig in Richtung der Achse A1 nach außen gedrängt werden, also außerhalb des axialen Teilabschnitts c.

Für eines der Werkzeuge 11', 12' oder für beide kann eine Heizvorrichtung vorgesehen sein, so dass die Werkzeuge 11', 12' beim Crimpprozess aufgeheizt sind. Gleichermaßen kann die Hülse 6 beim Crimpprozess durch eine entsprechende Heizvorrichtung aufgeheizt werden.

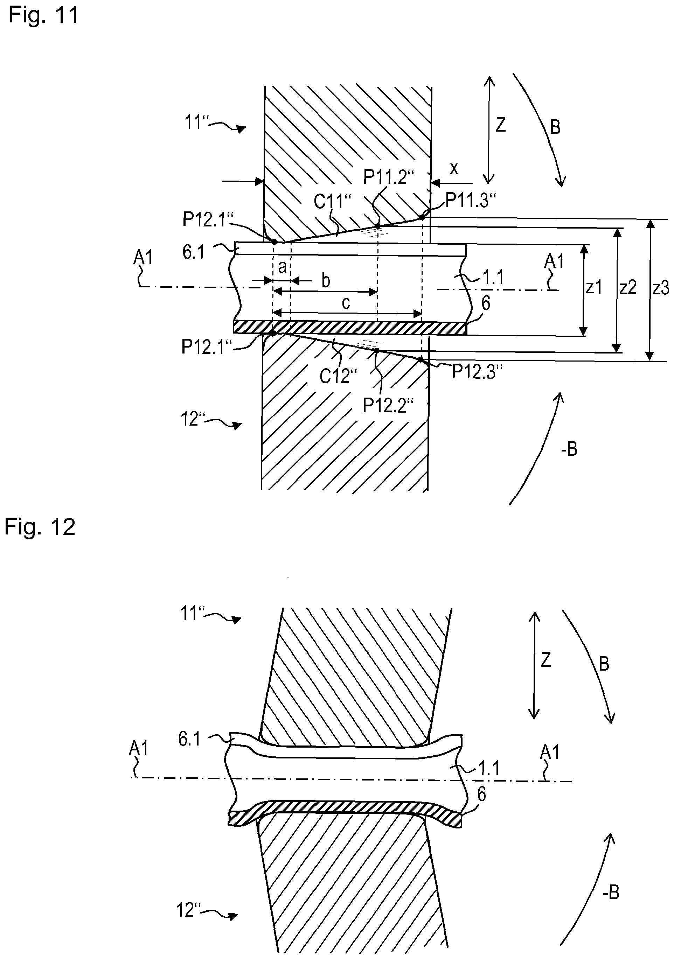

In den Figuren 11 und 12 ist eine Variante gemäß einem dritten Ausführungsbeispiel gezeigt. Das dritte Ausführungsbeispiel unterscheidet sich vom ersten und zweiten Ausführungsbeispiel im Wesentlichen durch eine andere Ausgestaltung der Crimpvorrichtung. Danach umfasst die Vorrichtung ein erstes Werkzeug 11" und ein zweites Werkzeug 12", welche jeweils einstückig ausgestaltet sind, beispielsweise als einstückige Crimpstempel. Die Werkzeuge 11 ", 12" weisen jeweils eine schräge beziehungsweise konische Crimpfläche C11", C12" auf. In der Folge sind in einer ersten Relativposition I gemäß der Figur 11 die Abstände z1, z2, z3 von einander in z-Richtung gegenüberliegender Punkte P11.1", P11.2", P11.3"; P12.1", P12.2", P12.3" auf den Crimpflächen C11 ", C12" des ersten und des zweiten Werkzeugs 11", 12" über die axiale Länge x hinweg unterschiedlich groß. Demnach liegen auch hier Punktepaare vor, die jeweils einen ersten Punkt P11.1", P11.2", P11.3" auf der ersten Crimpfläche C11" und einen zweiten Punkt P12.1 ", P12.2", P12.3" auf der zweiten Crimpfläche C12' umfassen, wobei die beiden Punkte P11.1 ", P11.2", P11.3"; P12.1 ", P12.2", P12.3" eines Punktepaares in z-Richtung gegenüberliegend angeordnet sind. Für axial zueinander beabstandete Punktepaare gilt, dass die Abstände z1, z2, z3 zwischen den zugehörigen Punkten P11.1", P11.2", P11.3"; P12.1", P12.2", P12.3" unterschiedlich groß sind.

Auch gemäß dem dritten Ausführungsbeispiel wird nach dem Aufheizen eines der Leiter 1.1, 2.1, 3.1, 4.1 ein Crimprozess durchgeführt, bei dem der aufgeheizte Leiter 1.1, 2.1, 3.1, 4.1 mit der Hülse 6 elektrisch kontaktiert wird.

Im dritten Ausführungsbeispiel werden die Werkzeuge 11", 12" nicht nur in z-Richtung zueinander bewegt, sondern auch während des Crimprozesses um eine Achse, die senkrecht zur z-Richtung und auch senkrecht zur Achse A1 orientiert ist, in Richtung der Pfeile B, -B geschwenkt.

Das Verpressen erfolgt nun hier in der Weise, dass zunächst eine Kompression des Leiters 1.1, 2.1, 3.1, 4.1 an dem ersten axialen Teilabschnitt a des Leiters 1.1, 2.1, 3.1, 4.1 erzeugt wird. Darauffolgend wird die Kompression des Leiters 1.1, 2.1, 3.1, 4.1 in Folge der Bewegung in z-Richtung und der überlagerten Schwenkbewegung auf einen größeren zweiten axialen Teilabschnitt b ausgeweitet und schließlich auf den noch größeren axialen Teilabschnitt c. Somit wird auch hier erreicht, dass Reste der Isolierung 1.2, 2.2, 3.2, 4.2 im Zuge des Crimpprozesses in axialer Richtung, also in Richtung der Achse A1, nach außen gedrängt werden, außerhalb des axialen Teilabschnitts c.

Für eines der Werkzeuge 11", 12" oder für beide kann eine Heizvorrichtung vorgesehen sein, so dass die Werkzeuge 11 ", 12" beim Crimpprozess aufgeheizt sind. Gleichermaßen kann die Hülse 6 beim Crimpprozess durch eine entsprechende Heizvorrichtung aufgeheizt werden.

In der Figur 12 ist eine Relativposition II der Werkzeuge 11", 12" am Ende des Bearbeitungshubs gezeigt, in der die Werkzeuge 11", 12" in z-Richtung zusammengefahren und in Richtung der Pfeile B, -B geschwenkt sind.

## Patentansprüche

1. Verfahren zur Herstellung eines Kabels, das
∼ einen Leiter (1.1, 2.1, 3.1, 4.1) mit Einzeldrähten aufweist, welcher zumindest abschnittsweise von einer Isolierung (1.2, 2.2, 3.2, 4.2) umgeben ist und
∼ eine Hülse (6) aufweist,
mit folgenden Schritten:
- Aufheizen des Leiters (1.1, 2.1, 3.1, 4.1) durch einen Induktionsprozess,
- Durchführung eines Crimpprozesses zur elektrischen Kontaktierung der Hülse (6) mit dem Leiter (1.1, 2.1, 3.1, 4.1) unmittelbar im Anschluss an das Aufheizen des Leiters (1.1, 2.1, 3.1, 4.1), wobei bei dem Crimpprozess die Hülse (6) mit dem aufgeheizten Leiter (1.1, 2.1, 3.1, 4.1) in einer Weise verpresst wird, dass
zunächst eine Kompression des Leiters (1.1, 2.1, 3.1, 4.1) an einem ersten axialen Teilabschnitt (a) des Leiters (1.1, 2.1, 3.1, 4.1) erzeugt wird und
darauffolgend die Kompression des Leiters (1.1, 2.1, 3.1, 4.1) auf einen größeren zweiten axialen Teilabschnitt (b, c) ausgeweitet wird.

2. Verfahren gemäß dem Anspruch 1, wobei zur Durchführung des Crimpprozesses ein erstes Werkzeug (11; 11'; 11") entlang einer z-Richtung relativ zu einem zweiten Werkzeug (12; 12'; 12") bewegt wird und das erste Werkzeug (11; 11'; 11") und / oder das zweite Werkzeug (12; 12'; 12") beheizt werden.

3. Verfahren gemäß einem der vorhergehenden Ansprüche, wobei vor der Durchführung des Aufheizens die Isolierung (1.2, 2.2, 3.2, 4.2) zumindest abschnittsweise entfernt wird.

4. Verfahren gemäß einem der vorhergehenden Ansprüche, wobei die Ausweitung der Kompression des Leiters (1.1, 2.1, 3.1, 4.1) ausgehend vom ersten axialen Teilabschnitt (a) zu beiden Seiten des ersten axialen Teilabschnitts (a) erfolgt.

5. Verfahren gemäß einem der vorhergehenden Ansprüche, wobei das Material der Isolierung (1.2, 2.2, 3.2, 4.2) Ethylenvinylacetat umfasst.

6. Verfahren gemäß einem der vorhergehenden Ansprüche, wobei der Leiter (1.1, 2.1, 3.1, 4.1) so ausgestaltet ist, dass dessen Einzeldrähte eine Schlaglänge von mindestens 12 mm aufweisen.

7. Verfahren gemäß einem der vorhergehenden Ansprüche, wobei der Crimpprozess bei einer Temperatur des Leiters (1.1, 2.1, 3.1, 4.1) von über 60 °C durchgeführt wird.

8. Verfahren gemäß einem der vorhergehenden Ansprüche, wobei das Kabel mehrere Leiter (1.1, 2.1, 3.1, 4.1) jeweils bestehend aus Einzeldrähten aufweist, welche zumindest abschnittsweise jeweils von einer Isolierung (1.2, 2.2, 3.2, 4.2) umgeben sind und das Kabel zudem mehrere Hülsen (6) aufweist, wobei bei einem aufgeheizten Leiter (1.1, 2.1, 3.1, 4.1) der Crimpprozess zur elektrischen Kontaktierung der Hülse (6) durchgeführt wird, während gleichzeitig ein anderer Leiter (1.1, 2.1, 3.1, 4.1) aufgeheizt wird.

9. Vorrichtung zur Herstellung eines Kabels, das einen Leiter (1.1, 2.1, 3.1, 4.1) mit mehreren Einzeldrähten aufweist, welcher mit einer Hülse (6) durch eine Crimpverbindung elektrisch kontaktiert ist, wobei die Vorrichtung
- eine Heizvorrichtung (10) zum Aufheizen des Leiters (1.1, 2.1, 3.1, 4.1), wobei die Heizvorrichtung (10) als Induktionsheizvorrichtung ausgestaltet ist,
- ein erstes Werkzeug (11; 11'; 11") mit einer ersten Crimpfläche (C11, C11', C11") und
- ein zweites Werkzeug (12; 12'; 12") mit einer zweiten Crimpfläche (C12, C12', C12") aufweist, wobei
zur Herstellung der Crimpverbindung unmittelbar im Anschluss an das Aufheizen des Leiters (1.1, 2.1, 3.1, 4.1) das erste Werkzeug (11; 11'; 11") entlang einer z-Richtung relativ zum zweiten Werkzeug (12; 12'; 12") bewegbar ist und in einer ersten Relativposition (I) der Werkzeuge (11; 11'; 11"; 12; 12'; 12")
die Crimpflächen (C11, C11', C11"; C12, C12', C12") über eine axiale Länge (x) hinweg in z-Richtung einander gegenüberliegend angeordnet sind, und
Punktepaare vorliegen, die jeweils einen ersten Punkt (P11.1, P11.2, P11.3; P11.1', P11,2', P11.3'; P11.1", P11.2". P11.3") auf der ersten Crimpfläche (C11, C11', C11") und einen zweiten Punkt (P12.1, P12.2, P12.3; P12.1', P12.2', P12.3'; P12.1", P12.2", P12.3") auf der zweiten Crimpfläche (C12, C12', C12") umfassen, wobei die beiden Punkte (P11.1, P11.2, P11.3; P11.1', P11.2', P11.3'; P11.1", P11.2", P11.3"; P12.1, P12.2, P12.3; P12.1', P12.2', P12.3'; P12,1", P12.2", P12.3") eines Punktepaares in z-Richtung gegenüberliegend angeordnet sind, wobei für axial zueinander beabstandete Punktepaare die Abstände (z1, z2, z3) zwischen den zugehörigen Punkten (P11.1, P11.2, P11.3; P11.1', P11.2', P11.3'; P11.1", P11,2", P11.3"; P12.1, P12.2, P12.3; P12.1', P12.2'. P12.3'; P12.1", P12.2", P12.3") unterschiedlich groß sind.

10. Vorrichtung gemäß dem Anspruch 9, wobei das erste Werkzeug (11) und / oder das zweite Werkzeug (12) mehrere Teilelemente (11.1 bis 11.5; 12.1 bis 12.5) umfasst, wobei jedes der Teilelemente (11.1 bis 11.5; 12.1 bis 12.5) eine Crimpfläche (C11, C12) aufweist und die Teilelemente (11.1 bis 11.5; 12.1 bis 12.5) des ersten Werkzeugs (11) und / oder des zweiten Werkzeugs (12) in z-Richtung relativ zueinander verschiebbar angeordnet sind.

11. Vorrichtung zur Herstellung eines Kabels, das einen Leiter (1.1, 2.1, 3.1, 4.1) mit mehreren Einzeldrähten aufweist, welcher mit einer Hülse (6) durch eine Crimpverbindung elektrisch kontaktiert ist, wobei die Vorrichtung
- eine Heizvorrichtung (10) zum Aufheizen des Leiters (1.1, 2.1, 3.1, 4.1),
- ein erstes Werkzeug (11; 11'; 11") mit einer ersten Crimpfläche (C11, C11', C11") und
- ein zweites Werkzeug (12; 12'; 12") mit einer zweiten Crimpfläche (C12, C12', C12") aufweist, wobei
zur Herstellung der Crimpverbindung das erste Werkzeug (11; 11'; 11") entlang einer z-Richtung relativ zum zweiten Werkzeug (12; 12'; 12") bewegbar ist und in einer ersten Relativposition (I) der Werkzeuge (11; 11'; 11"; 12; 12'; 12")
die Crimpflächen (C11, C11', C11"; C12, C12', C12") über eine axiale Länge (x) hinweg in z-Richtung einander gegenüberliegend angeordnet sind, und
Punktepaare vorliegen, die jeweils einen ersten Punkt (P11.1, P11.2, P11.3; P11.1', P11.2', P11.3'; P11.1". P11.2", P11.3") auf der ersten Crimpfläcfle (C11, C11', C11") und einen zweiten Punkt (P12.1, P12.2, P12.3; P12.1', P12.2', P12.3'; P12.1", P12.2", P12.3") auf der zweiten Crimpfläche (C12, C12', C12") umfassen, wobei die beiden Punkte (P11.1, P11.2, P11.3; P11.1', P11.2', P11.3'; P11.1", P11.2", P11.3"; P12.1, P12.2, P12.3; P12.1', P12.2', P12.3'; P12.1", P12.2", P12.3") eines Punktepaares in z-Richtung gegenüberliegend angeordnet sind, wobei für axial zueinander beabstandete Punktepaare die Abstände (z1, z2, z3) zwischen den zugehörigen Punkten (P11.1, P11,2, P11.3; P11.1', P11.2', P11.3'; P11.1", P11.2", P11.3"; P12.1, P12.2, P12.3; P12.1', P12.2', P12.3'; P12.1", P12.2", P12.3") unterschiedlich groß sind, wobei
das erste Werkzeug (11) und oder das zweite Werkzeug (12) mehrere Teilelemente (11.1 bis 11.5; 12.1 bis 12.5) umfasst, wobei jedes der Teilelemente (11.1 bis 11.5; 12.1 bis 12.5) eine Crimpfläche (C11, C12) aufweist und die Teilelemente (11.1 bis 11.5; 12.1 bis 12.5) des ersten Werkzeugs (11) und / oder des zweiten Werkzeugs (12) in z-Richtung relativ zueinander verschiebbar angeordnet sind.

12. Vorrichtung gemäß dem Anspruch 11, wobei die Heizvorrichtung (10) als Induktionsheizvorrichtung ausgestaltet ist.

13. Vorrichtung gemäß einem der Ansprüche 9 oder 11, wobei das erste Werkzeug (11; 11'; 11 ") und / oder das zweite Werkzeug (12; 12'; 12") beheizbar sind.

14. Vorrichtung gemäß dem Anspruch 11, wobei zur Herstellung der Crimpverbindung das erste Werkzeug (11) entlang der z-Richtung relativ zum zweiten Werkzeug (12) innerhalb eines Bearbeitungshubs bewegbar ist, wobei mit zunehmender Annäherung der Werkzeuge (11, 12) die Unterschiede der Abstände (z1, z2, z3) zwischen den zugehörigen Punkten (P11.1, P11.2, P11.3; P11.1', P11.2', P11.3'; P11.1", P11.2", P11.3"; P12.1, P12.2, P12.3; P12.1', P12.2', P12.3'; P12.1", P12.2", P12.3") kleiner werden.

15. Kabel, das einen Leiter (1.1, 2.1, 3.1, 4,1) mit mehreren Einzeldrähten aufweist, welcher zumindest abschnittsweise von einer Isolierung (1.2, 2.2, 3.2, 4.2) umgeben ist und mit einer Hülse (6) durch eine Crimpverbindung elektrisch kontaktiert ist, hergestellt nach einem Verfahren gemäß einem der Ansprüche 1 bis 8.

## Claims

1. Method for producing a cable, which cable
∼ has a conductor (1.1, 2.1, 3.1, 4.1) with individual wires, which conductor is surrounded at least in sections by an insulation (1.2, 2.2, 3.2, 4.2), and
∼ has a sleeve (6),
the said method comprising the following steps:
- heating the conductor (1.1, 2.1, 3.1, 4.1) using an induction process,
- carrying out a crimping process for the conductor (1.1, 2.1, 3.1, 4.1) to make electrical contact with the sleeve (6) immediately after the conductor (1.1, 2.1, 3.1, 4.1) is heated, wherein, during the crimping process, the sleeve (6) is pressed together with the heated conductor (1.1, 2.1, 3.1, 4.1) in such a way that,
firstly, compression of the conductor (1.1, 2.1, 3.1, 4.1) is generated at.a first axial subsection (a) of the conductor (1.1, 2.1, 3.1, 4.1), and
subsequently, the compression of the conductor (1.1, 2.1, 3.1, 4.1) is widened to a larger second axial subsection (b, c).

2. Method according to Claim 1, wherein, in order to carry out the crimping process, a first tool (1.1; 11'; 11") is moved along a z direction relative to a second tool (12; 12'; 12"), and the first tool (11; 11'; 11") and/or the second tool (12; 12'; 12") are/is heated.

3. Method according to either of the preceding claims, wherein the insulation (1.2, 2.2, 3.2, 4.2) is removed at least in sections before the heating is carried out.

4. Method according to one of the preceding claims, wherein widening of the compression of the conductor (1.1, 2.1, 3.1, 4.1) is performed starting from the first axial subsection (a) on both sides of the first axial subsection (a).

5. Method according to one of the preceding claims, wherein the material of the insulation (1.2, 2.2, 3.2, 4.2) comprises ethylene vinyl acetate.

6. Method according to one of the preceding claims, wherein the conductor (1.1, 2.1, 3.1, 4.1) is designed such that the individual wires of the said conductor have a lay length of at least 12 mm.

7. Method according to one of the preceding claims, wherein the crimping process is carried out at a temperature of the conductor (1.1, 2.1, 3.1, 4.1) of above 60°C.

8. Method according to one of the preceding claims, wherein the cable has a plurality of conductors (1.1, 2.1, 3.1, 4.1) each consisting of individual wires which are surrounded at least in sections by an insulation (1.2, 2.2, 3.2, 4.2) in each case, and the cable additionally has a plurality of sleeves (6), wherein, given a heated conductor (1.1, 2.1, 3.1, 4.1), the crimping process is carried out for making electrical contact with the sleeve (6) while another conductor (1.1, 2.1, 3.1, 4.1) is heated at the same time.

9. Apparatus for producing a cable which has a conductor (1.1, 2.1, 3.1, 4.1) with a plurality of individual wires, a sleeve (6) making electrical contact with the said conductor by means of a crimp connection, wherein the apparatus has
- a heating apparatus (10) for heating the conductor (1.1, 2.1, 3.1, 4.1), wherein the heating apparatus (10) is designed as an induction heating apparatus,
- a first tool (11; 11'; 11") with a first crimping area (C11, C11', C11"), and
- a second tool (12; 12'; 12") with a second crimping area (C12, C12', C12"), wherein,
in order to establish the crimp connection immediately after heating of the conductor (1.1, 2.1, 3.1, 4.1), the first tool (11; 11'; 11") can be moved along a z direction relative to the second tool (12; 12'; 12") and, in a relative position (I) of the tools (11; 11'; 11"; 12; 12'; 12"),
the crimping areas (C11, C11', C11" ; C12, C12', C12") are arranged opposite one another in the z direction over an axial length (x), and
there are pairs of points which each comprise a first point (P11.1, P11.2, P11.3; P11.1', P11.2', P11.3'; P11.1", P11.2", P11.3") on the first crimping area (C11, C11', C11") and a second point (P12.1, P12.2, P12.3; P12.1', P12.2', P12.3'; P12.1", P12.2", P12.3") on the second crimping area (C12, C12', C12"), wherein the two points (P11.1, P11.2, P11.3; P11.1', P11.2', P11.3'; P11.1", P11.2", P11.3" ; P12.1, P12.2, P12.3; P12.1', P12.2', P12.3'; P12.1", P12.2", P12.3") of a pair of points are arranged opposite one another in the z direction, wherein, for pairs of points which are axially spaced apart from one another, the distances (z1, z2, z3) between the associated points (P11.1, P11.2, P11.3; P11.1', P11.2', P11.3'; P11.1", P11.2", P11.3"; P12.1, P12.2, P12.3; P12.1', P12.2', P12.3'; P12.1", P12.2" P12.3") are of different magnitudes.

10. Apparatus according to Claim 9, wherein the first tool (11) and/or the second tool (12) comprise/comprises a plurality of component elements (11.1 to 11.5; 12.1 to 12.5), wherein each of the component elements (11.1 to 11.5; 12.1 to 12.5) has a crimping area (C11, C12), and the component elements (11.1 to 11.5; 12.1 to 12.5) of the first tool (11) and/or of the second tool (12) are arranged such that they can be displaced relative to one another in the z direction.

11. Apparatus for producing a cable which has a conductor (1.1, 2.1, 3.1, 4.1) with a plurality of individual wires, a sleeve (6) making electrical contact with the said conductor by means of a crimp connection, wherein the apparatus has
- a heating apparatus (10) for heating the conductor (1.1, 2.1, 3.1, 4.1),
- a first tool (11; 11'; 11") with a first crimping area (C11, C11', C11"), and
- a second tool (12; 12'; 12") with a second crimping area (C12, C12', C12"), wherein,
in order to establish the crimp connection, the first tool (11; 11'; 11") can be moved along a z direction relative to the second tool (12; 12'; 12") and, in a first relative position (I) of the tools (11; 11'; 11"; 12; 12'; 12"),
the crimping areas (C11, C11' , C11"; C12, C12', C12") are arranged opposite one another in the z direction over an axial length (x), and
there are pairs of points which each comprise a first point (P11.1, P11.2, P11.3; P11.1', P11.2', P11.3'; P11.1", P11.2", P11.3") on the first crimping area (C11, C11', C11") and a second point (P12.1, P12.2, P12.3; P12.1', P12.2', P12.3'; P12.1", P12.2", P12.3") on the second crimping area (C12, C12', C12"), wherein the two points (P11.1, P11.2, P11.3; P11.1', P11.2', P11.3'; P11.1", P11.2", P11.3"; P12.1, P12.2, P12.3; P12.1', P12.2', P12.3'; P12.1", P12.2", P12.3") of a pair of points are arranged opposite one another in the z direction, wherein, for pairs of points which are axially spaced apart from one another, the distances (z1, z2, z3) between the associated points (P11.1, P11.2, P11.3; P11.1', P11.2', P11.3'; P11.1", P11.2", P11.3"; P12.1, P12.2, P12.3; P12.1', P12.2', P12.3'; P12.1", P12.2", P12.3") are of different magnitudes, wherein
the first tool (11) and/or the second tool (12) comprise/comprises a plurality of component elements (11.1 to 11.5; 12.1 to 12.5), wherein each of the component elements (11.1 to 11.5; 12.1 to 12.5) has a crimping area (C11, C12), and the component elements (11.1 to 11.5; 12.1 to 12.5) of the first tool (11) and/or of the second tool (12) are arranged such that they can be displaced relative to one another in the z direction.

12. Apparatus according to Claim 11, wherein the heating apparatus (10) is designed as an induction heating apparatus.

13. Apparatus according to either of Claims 9 and 11, wherein the first tool (11; 11'; 11") and/or the second tool (12; 12'; 12") can be heated.

14. Apparatus according to Claim 11, wherein, in order to establish the crimp connection, the first tool (11) can be moved along the z direction relative to the second tool (12) within one processing stroke, wherein the differences in the distances (z1, z2, z3) between the associated points (P11.1, P11.2, P11.3; P11.1', P11.2', P11.3'; P11.1", P11.2", P11.3"; P12.1, P12.2, P12.3; P12.1', P12.2', P12.3'; P12.1", P12.2", P12.3") becomes smaller as the tools (11, 12) move closer together.

15. Cable which has a conductor (1.1, 2.1, 3.1, 4.1) with a plurality of individual wires, which conductor is surrounded at least in sections by an insulation (1.2, 2.2, 3.2, 4.2) and with which conductor electrical contact is made by a sleeve (6) by means of a crimp connection, the said cable being produced in line with a method according to one of Claims 1 to 8.

## Revendications

1. Procédé de fabrication d'un câble, qui présente
- un conducteur (1.1, 2.1, 3.1, 4.1) avec des fils individuels, qui est entouré au moins en partie par une isolation (1.2, 2.2, 3.2, 4.2) et
- une douille (6),
comprenant les étapes suivantes :
- chauffage du conducteur (1.1, 2.1, 3.1, 4.1) par un processus d'induction,
- réalisation d'un processus de sertissage pour la mise en contact électrique de la douille (6) avec le conducteur (1.1, 2.1, 3.1, 4.1) directement à la suite du chauffage du conducteur (1.1, 2.1, 3.1, 4.1), la douille (6), lors du processus de sertissage, étant pressée avec le conducteur chauffé (1.1, 2.1, 3.1, 4.1) de telle sorte
qu'il se produise initialement une compression du conducteur (1.1, 2.1, 3.1, 4.1) au niveau d'une première section partielle axiale (a) du conducteur (1.1, 2.1, 3.1, 4.1) et
qu'ensuite la compression du conducteur (1.1, 2.1, 3.1, 4.1) soit élargie à une plus grande, deuxième, section partielle axiale (b, c).

2. Procédé selon la revendication 1, dans lequel, pour réaliser le processus de sertissage, un premier outil (11 ; 11' ; 11") est déplacé le long d'une direction z par rapport à un deuxième outil (12 ; 12' ; 12") et le premier outil (11 ; 11' ; 11") et/ou le deuxième outil (12 ; 12' ; 12") sont chauffés.

3. Procédé selon l'une quelconque des revendications précédentes, dans lequel, avant de réaliser le chauffage, l'isolation (1.2, 2.2, 3.2, 4.2) est au moins en partie enlevée.

4. Procédé selon l'une quelconque des revendications précédentes, dans lequel l'élargissement de la compression du conducteur (1.1, 2.1, 3.1, 4.1) s'effectue à partir de la première section partielle axiale (a) des deux côtés de la première section partielle axiale (a).

5. Procédé selon l'une quelconque des revendications précédentes, dans lequel le matériau de l'isolation (1.2, 2.2, 3.2, 4.2) comprend de l'éthylène-acétate de vinyle.

6. Procédé selon l'une quelconque des revendications précédentes, dans lequel le conducteur (1.1, 2.1, 3.1, 4.1) est configuré de telle sorte que ses fils individuels présentent un pas de câblage d'au moins 12 mm.

7. Procédé selon l'une quelconque des revendications précédentes, dans lequel le processus de sertissage est effectué à une température du conducteur (1.1, 2.1, 3.1, 4.1) supérieure à 60° C.

8. Procédé selon l'une quelconque des revendications précédentes, dans lequel le câble présente plusieurs conducteurs (1.1, 2.1, 3.1, 4.1) à chaque fois constitués de fils individuels, qui sont au moins en partie à chaque fois entourés par une isolation (1.2, 2.2, 3.2, 4.2) et le câble présente en outre plusieurs douilles (6), le processus de sertissage étant effectué pour un conducteur chauffé (1.1, 2.1, 3.1, 4.1), pour la mise en contact électrique de la douille (6), pendant que simultanément un autre conducteur (1.1, 2.1, 3.1, 4.1) est chauffé.

9. Dispositif de fabrication d'un câble qui présente un conducteur (1.1, 2.1, 3.1, 4.1) avec plusieurs fils individuels, qui est mis en contact électrique avec une douille (6) par une connexion par sertissage, le dispositif présentant
- un dispositif de chauffage (10) pour chauffer le conducteur (1.1, 2.1, 3.1, 4.1), le dispositif de chauffage (10) étant réalisé sous forme de dispositif de chauffage par induction,
- un premier outil (11 ; 11' ; 11") avec une première surface de sertissage (C11, C11', C11") et
- un deuxième outil (12 ; 12' ; 12") avec une deuxième surface de sertissage (C12, C12', C12"),
le premier outil (11 ; 11' ; 11"), pour la fabrication de la connexion par sertissage, étant déplacé directement à la suite du chauffage du conducteur (1.1, 2.1, 3.1, 4.1), le long d'une direction z par rapport au deuxième outil (12 ; 12' ; 12") et, dans une première position relative (I) des outils (11 ; 11' ; 11" ; 12 ; 12' ; 12"),
les surfaces de sertissage (C11, C11', C11" ; C12, C12', C12") étant disposées en regard les unes des autres dans la direction z au-delà d'une longueur axiale (x), et
des paires de points étant prévues, lesquelles comprennent à chaque fois un premier point (P11.1, P11.2, P11.3 ; P11.1', P11.2', P11.3' ; P11.1", P11.2", P11.3") sur la première surface de sertissage (C11, C11', C11") et un deuxième point (P12.1, P12.2, P12.3 ; P12.1', P12.2', P12.3' ; P12.1", P12.2", P12.3") sur la deuxième surface de sertissage (C12, C12', C12"), les deux points (P11.1, P11.2, P11.3 ; P11.1', P11.2', P11.3' ; P11.1", P11.2", P11.3" ; P12.1, P12.2, P12.3 ; P12.1', P12.2', P12.3' ; P12.1", P12.2", P12.3") d'une paire de points étant disposés à l'opposé l'un de l'autre dans la direction z, les distances (z1, z2, z3) entre les points associés (P11.1, P11.2, P11.3 ; P11.1', P11.2', P11.3' ; P11.1", P11.2", P11.3" ; P12.1, P12.2, P12.3 ; P12.1', P12.2', P12.3' ; P12.1", P12.2", P12.3") étant différentes pour des paires de points espacées axialement les unes des autres.

10. Dispositif selon la revendication 9, dans lequel le premier outil (11) et/ou le deuxième outil (12) présentent plusieurs éléments partiels (11.1 à 11.5 ; 12.1 à 12.5), chacun des éléments partiels (11.1 à 11.5 ; 12.1 à 12.5) présentant une surface de sertissage (C11, C12) et les éléments partiels (11.1 à 11.5 ; 12.1 à 12.5) du premier outil (11) et/ou du deuxième outil (12) étant disposés dans la direction z de manière déplaçable les uns par rapport aux autres.

11. Dispositif de fabrication d'un câble, qui présente un conducteur (1.1, 2.1, 3.1, 4.1) avec plusieurs fils individuels, qui est mis en contact électrique par une connexion par sertissage avec une douille (6), le dispositif présentant
- un dispositif de chauffage (10) pour chauffer le conducteur (1.1, 2.1, 3.1, 4.1),
- un premier outil (11 ; 11' ; 11") avec une première surface de sertissage (C11, C11', C11") et
- un deuxième outil (12 ; 12' ; 12") avec une deuxième surface de sertissage (C12, C12', C12"),
le premier outil (11 ; 11' ; 11"), pour fabriquer la connexion par sertissage, pouvant être déplacé le long d'une direction z par rapport au deuxième outil (12 ; 12' ; 12") et, dans une première position relative (I) des outils (11 ; 11' ; 11" ; 12 ; 12' ; 12"),
les surfaces de sertissage (C11, C11', C11" ; C12, C12', C12") étant disposées en regard les unes des autres dans la direction z au-delà d'une longueur axiale (x), et
des paires de points étant prévues, lesquelles comprennent à chaque fois un premier point (P11.1, P11.2, P11.3 ; P11.1', P11.2', P11.3' ; P11.1", P11.2", P11.3") sur la première surface de sertissage (C11, C11', C11") et un deuxième point (P12.1, P12.2, P12.3 ; P12.1', P12.2', P12.3' ; P12.1", P12.2", P12.3") sur la deuxième surface de sertissage (C12, C12', C12"), les deux points (P11.1, P11.2, P11.3 ; P11.1', P11.2', P11.3' ; P11.1", P11.2", P11.3" ; P12.1, P12.2, P12.3 ; P12.1', P12.2', P12.3' ; P12.1", P12.2", P12.3") d'une paire de points étant disposés à l'opposé l'un de l'autre dans la direction z, les distances (z1, z2, z3) entre les points associés (P11.1, P11.2, P11.3 ; P11.1', P11.2', P11.3' ; P11.1", P11.2", P11.3" ; P12.1, P12.2, P12.3 ; P12.1', P12.2', P12.3' ; P12.1", P12.2", P12.3") étant différentes pour des paires de points espacées axialement les unes des autres,
le premier outil (11) et/ou le deuxième outil (12) comprenant plusieurs éléments partiels (11.1 à 11.5 ; 12.1 à 12.5), chacun des éléments partiels (11.1 à 11.5 ; 12.1 à 12.5) présentant une surface de sertissage (C11, C12) et les éléments partiels (11.1 à 11.5 ; 12.1 à 12.5) du premier outil (11) et/ou du deuxième outil (12) étant disposés de manière déplaçable les uns par rapport aux autres dans la direction z.

12. Dispositif selon la revendication 11, dans lequel le dispositif de chauffage (10) est configuré sous forme de dispositif de chauffage par induction.

13. Dispositif selon l'une quelconque des revendications 9 ou 11, dans lequel le premier outil (11 ; 11' ; 11'') et/ou le deuxième outil (12 ; 12' ; 12'') peuvent être chauffés.

14. Dispositif selon la revendication 11, dans lequel pour la fabrication de la connexion par sertissage, le premier outil (11) peut être déplacé le long de la direction z par rapport au deuxième outil (12) à l'intérieur d'une course de traitement, le rapprochement des outils (11, 12) s'accompagnant d'une réduction des différences des distances (z1, z2, z3) entre les points associés (P11.1, P11.2, P11.3 ; P11.1', P11.2', P11.3' ; P11.1", P11.2'', P11.3'' ; P12.1, P12.2, P12.3 ; P12.1', P12.2', P12.3' ; P12.1'', P12.2'', P12.3'').

15. Câble présentant un conducteur (1.1, 2.1, 3.1, 4.1) avec plusieurs fils individuels, qui est entouré au moins en partie par une isolation (1.2, 2.2, 3.2, 4.2) et est mis en contact électrique par une connexion par sertissage avec une douille (6), fabriqué selon un procédé selon l'une quelconque des revendications 1 à 8.
